# EUROPÄISCHE PATENTANMELDUNG

(11) **EP 0 870 772 A2**
(43) Veröffentlichungstag der Anmeldung: **14.10.1998**
(21) Anmeldenummer: 98105591.6
(22) Anmeldetag: 27.03.1998
(51) Int. Cl.: C08F 2/18, C08F 4/32

(54) **Verfahren zur Herstellung vernetzter kugelförmiger Polymerisate**

(30) Priorität: 10.04.1997 DE 19714827
(71) Anmelder: BAYER AG, 51368 Leverkusen (DE)
(72) Erfinder: Podszun, Wolfgang, Dr., 51061 Köln (DE); Halle, Olaf, Dr., 51061 Köln (DE); Strüver, Werner, Dr., 51375 Leverkusen (DE); Bloodworth, Robert, Dr., 51061 Köln (DE); Lütjens, Holger, Dr., 51065 Köln (DE)

(57) **Zusammenfassung**

Suspensionspolymerisate mit hoher Quellbarkeit weisen niedrige Gehalte an löslichen Anteilen auf, wenn als Polymerisationsinitiatoren aliphatische Peroxyester verwendet werden.

## Beschreibung

Die Erfindung betrifft ein Verfahren zur Herstellung von vernetzten kugelförmigen Polymerisaten mit hoher Quellbarkeit und niedrigen Gehalten an löslichen Anteilen unter Verwendung von Peroxyestern als Polymerisationsinitiatoren.

In jüngster Zeit haben Ionenaustauscher mit möglichst einheitlicher Teilchengröße (im folgenden 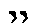 monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können. Monodisperse Ionenaustauscher können durch Funktionalisieren von monodispersen Perlpolymerisaten erhalten werden.

Eine der Möglichkeiten, monodisperse Perlpolymerisate herzustellen, besteht im sog. seed/feed-Verfahren, wonach ein monodisperses Polymerisat ( 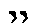 Saat") im Monomer gequollen und dieses dann polymerisiert wird. Seed/feed-Verfahren werden beispielsweise in den EP-PS 98 130 und 101 943 beschrieben

Saatpolymere sollen einen hohen Quellungsindex aufweisen, damit sie beim seed/feed-Verfahren eine große Menge des zugesetzten Monomeren aufnehmen können. Als Quellungsindex (QI) ist der Quotient aus dem Volumen des gequollenen Polymeren und dem Volumen des nicht gequollenen Polymeren definiert. Der Quellungsindex läßt sich in bekannter Weise durch den Gehalt an Vernetzer steuern: Niedrige Vernetzergehalte führen zu hohen Quellungsindices und umgekehrt. So weisen beispielsweise Styrolpolymerisate, die mit 0,2 bis 0,5 Gew.-% Divinylbenzol vernetzt sind, Quellungsindices von 5 bis 10 in Toluol auf Niedrig vernetzte Saatpolymerisate haben allerdings einen recht hohen Anteil an nicht vernetzten, löslichen Polymeren. Dieser Anteil an nicht vernetzten, löslichen Polymeren im Saatpolymerisat ist in mehrfacher Hinsicht unerwünscht:
1. Die Polymerisation der gequollenen Saat kann dadurch gestört werden, daß die durch das zugesetzte Monomer aus der Saat herausgelöster Polymeranteile Verklebungen der Partikel untereinander verursachen.
2. Die Funktionalisierung zur Herstellung der Ionenaustauscher kann dadurch erschwert werden, daß die herausgelösten Polymeranteile in den zur Funktionalisierung eingesetzten Reaktionslösungen angereichert werden.
3. Die Endprodukte (Ionenaustauscher) können erhöhte Mengen an löslichen Polymeren enthalten, was zu einem unerwünschten Ausbluten (leaching) der Ionenaustauscher führen kann.

Die Aufgabe der vorliegenden Erfindung ist die Bereitstellung von vernetzten kugelförmigen Polymerisaten mit hoher Quellbarkeit und niedrigen Gehalten an löslichen Anteilen.

Es wurde nun gefunden, daß Polymerisate mit niedrigen Vernetzergehalten und entsprechend hoher Quellbarkeit dann besonders niedrige Gehalte löslicher Polymeranteile enthalten, wenn bei ihrer Herstellung Peroxyester als Initiatoren eingesetzt worden sind.

Gegenstand der vorliegenden Erfindung ist ein Verfahren zur Herstellung von vernetzten kugelförmigen Polymerisaten nach der Methode der Suspensionspolymerisation aus einem Gemisch aus
a) 98,2 bis 99,7, vorzugsweise 98,6 bis 99,6 Gew.-% Monomer,
b) 0,1 bis 0,8, vorzugsweise 0,2 bis 0,4 Gew.-% Vernetzer und
c) 0,2 bis 1,0 Gew.-% Polymerisationsinitiator,
wobei sich die Prozentangaben auf die Summe der Komponenten a) bis c) beziehen,
dadurch gekennzeichnet, daß als Polymerisationsinitiator c) mindestens ein aliphatischer Peroxyester verwendet wird.

Monomere a) im Sinne der Erfindung sind Verbindungen mit einer radikalisch polymerisierbaren C=C-Doppelbindung pro Molekül. Bevorzugte Verbindungen dieser Art umfassen aromatische Monomere wie beispielsweise Vinyl- und Vinylidenderivate des Benzols und des Naphthalins, wie z.B. Vinylnaphthalin, Vinyltoluol, Ethylstyrol, α-Methylstyrol, Chlorstyrole, vorzugsweise Styrol, sowie nicht-aromatische Vinyl- und Vinylidenverbindungen, wie z.B. Acrylsäure, Methacrylsäure, Acrylsäure-C₁-C₈-alkylester, Methacrylsäure-C₁-C₈-alkylester, Acrylnitril, Methacrylnitril, Acrylamid, Methacrylamid, Vinylchlorid, Vinylidenchlorid und Vinylacetat. Vorzugsweise werden die nicht-aromatischen Monomeren in untergeordneten Mengen, vorzugsweise in Mengen von 0,1 bis 50, insbesondere 0,5 bis 20 Gew.-%, bezogen auf aromatische Monomere, verwendet. In den meisten Fallen wird man jedoch ausschließlich aromatische Monomere verwenden.

Als Vernetzer b) sind Verbindungen geeignet, die zwei oder mehr, vorzugsweise zwei bis vier radikalisch polymerisierbare Doppelbindungen pro Molekül enthalten. Beispielhaft seien genannt: Divinylbenzol, Divinyltoluol, Trivinylbenzol, Divinylnaphthalin, Trivinylnaphthalin, Diethylenglycoldivinylether, Octadien-1,7, Hexadien-1,5, Ethylenglycoldimethacrylat, Triethylenglycoldimethacrylat, Trimethylolpropantrimethacrylat, Allylmethacrylat und Methylen-N,N'-bisacrylamid. Divinylbenzol wird als Vernetzer bevorzugt. Für die meisten Anwendungen sind kommerzielle Divinylbenzolqualitäten, die neben den Isomeren des Divinylbenzols auch Ethylvinylbenzol enthalten, ausreichend.

Aliphatische Peroxyester c) entsprechen den Formeln I, II oder III 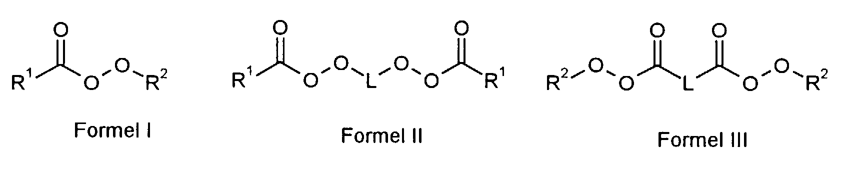 worin
- R¹: einen Alkylrest mit 2 bis 20 C-Atomen oder einen Cycloalkylrest mit bis zu 20 C-Atomen,
- R²: einen verzweigten Alkylrest mit 4 bis 12 C-Atomen und
- L: einen Alkylrest mit 2 bis 20 C-Atomen oder einen Cycloalkylenrest mit bis zu 20 C-Atomen bedeuten.

Bevorzugte aliphatische Peroxyester gemäß Formel I sind z.B.
tert.-Butylperoxyacetat,
tert.-Butylperoxyisobutyrat,
tert.-Butylperoxypivalat,
tert.-Butylperoxyoctoat,
tert.-Butylperoxy-2-ethylhexanoat,
tert.-Butylperoxyneodecanoat,
tert.-Amylperoxyneodecanoat,
tert.-Amylperoxypivalat,
tert.-Amylperoxyoctoat,
tert.-Amylperoxy-2-ethylhexanoat und
tert.-Amylperoxyneodecanoat.

Bevorzugte aliphatische Peroxyester gemäß Formel II sind z.B.
2,5-Bis(2-ethylhexanoylperoxy)-2,5-dimethylhexan,
2,5-Dipivaloyl-2,5-dimethylhexan und
2,5-Bis(2-neodecanoylperoxy)-2,5-dimethylhexan.

Bevorzugte aliphatische Peroxyester gemäß Formel III sind z.B.
Di-tert.-butylperoxyazelat und
Di-tert.-amylperoxyazelat.

Unter dem Begriff Suspensionspolymerisation wird ein Verfahren verstanden, bei dem eine Monomerphase, die einen im Monomer löslichen Initiator enthält, in einer mit dem Monomer im wesentlichen nicht mischbaren Phase in Form von Tröpfchen zerteilt wird und durch Temperaturerhöhung unter Rühren ausgehärtet wird. Weitere Einzelheiten der Suspensionspolymerisation werden beispielsweise in der Publikation Polymer Processes, herausgegeben von C.E. Schildknecht, publiziert 1956 durch Interscience Publishers, Inc. New York, im Kapitel 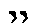 Polymerization in Suspension" auf den Seiten 69 bis 109 beschrieben. Im Falle der vorliegenden Erfindung ist die mit dem Monomer im wesentlichen nicht mischbare Phase vorzugsweise eine wäßrige Phase.

In einer besonderen Ausführungsform der vorliegenden Erfindung ist das Gemisch aus Vinylaromat a), Vernetzer b) und aliphatischem Peroxyester c) mikroverkapselt.

Für die Mikroverkapselung kommen die für diesen Einsatzzweck bekannten Materialien in Frage, insbesondere Polyester, natürliche und synthetische Polyamide, Polyurethane, Polyharnstoffe. Als natürliches Polyamid ist Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von z.B. Maleinsäure, Acrylsäure, Methacrylsäure, Acrylamid und Methacrylamid. Gelatinehaltige Kapseln können mit üblichen Härtungsmitteln wie z.B. Formaldehyd oder Glutardialdehyd gehärtet werden. Die Verkapselung von Monomertröpfchen beispielsweise mit Gelatine, gelatinehaltigen Koazervaten und gelatinehaltigen Komplexkoazervaten, wird in EP-PS 46 535 eingehend beschrieben. Die Methoden der Verkapselung mit synthetischen Polymeren sind an sich bekannt. Gut geeignet ist beispielsweise die Phasengrenzflächenkondensation, bei der eine im Monomertröpfchen gelöste Reaktivkomponente (z.B. ein Isocyanat oder ein Säurechlorid) mit einer zweiten in der wäßrigen Phase gelösten Reaktivkomponente (z.B. einem Amin) zur Reaktion gebracht wird.

Die mittlere Teilchengröße der gegebenenfalls verkapselten Monomertröpfchen beträgt 10 bis 1000 µm, vorzugsweise 100 bis 1000 µm.

Das erfindungsgemäße Verfahren ist auch zur Herstellung monodisperser kugelförmiger Polymerisate, insbesondere solcher gemäß EP-PS 46 535, gut geeignet. Die wäßrige Phase enthält dann zweckmäßigerweise ein oder mehrere Schutzkolloide. Bevorzugte Schutzkolloide sind natürliche und synthetische wasserlösliche Polymere, wie z.B. Gelatine, Stärke, Polyvinylalkohol, Polyvinylpyrrolidon, Polyacrylsäure, Polymethacrylsäure und Copolymerisate aus (Meth)acrylsäure und (Meth)acrylsäureestern. Sehr gut geeignet sind auch Cellulosederivate, insbesondere Celluloseester und Celluloseether, wie Methylhydroxyethylcellulose, Methylhydroxypropylcellulose, Hydroxyethylcellulose und Carboxymethylcellulose. Zur Polymerisation von mit Gelatine oder gelatinehaltigen Komplexkoazervaten verkapselten Monomertröpfchen ist Gelatine als Schutzkolloid besonders gut geeignet. Die Einsatzmenge der Schutzkolloide beträgt im allgemeinen 0,02 bis 1, vorzugsweise 0,05 bis 0,3 Gew.-%, bezogen auf die wäßrige Phase. Die wäßrige Phase kann darüber hinaus ein Puffersystem enthalten. Bevorzugt werden Puffersysteme, die den pH-Wert der wäßrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflußt. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säure und Salze. Die Konzentration an Phosphat bzw. Borat in der wäßrigen Phase beträgt 0,5 - 500, vorzugsweise 5 - 100 mMol/l.

Die wäßrige Phase kann weiterhin einen gelösten Polymerisationsinhibitor enthalten. Als Inhibitoren kommen sowohl anorganische als auch organische Stoffe in Frage. Beispiele für anorganische Inhibitoren sind Übergangsmetallsalze wie Kupfer(II)-chlorid, Kupfer(II)sulfat, Eisen(III)chlorid, Eisen(II)sulfat, Mangan(II)chlorid, Stickstoffverbindungen wie Hydroxylamin, Hydrazin, Natriumnitrit und Kaliumnitrit. Beispiele für organische Inhibitoren sind phenolische Verbindungen wie Hydrochinon, Hydrochinonmonomethylether, Resorcin, Brenzkatechin, tert-Butylbrenzkatechin, Kondensationsprodukte aus Phenolen mit Aldehyden. Weitere organische Inhibitoren sind stickstoffhaltige Verbindungen wie z.B. Diethylhydroxylamin und Isopropylhydroxylamin. Die Konzentration des Inhibitors betragt 5 - 1000, vorzugsweise 10 - 500, besonders bevorzugt 20 - 250 ppm, bezogen auf die wäßrige Phase.

Das Volumenverhältnis von Monomerphase zur wäßrigen Phase beträgt im allgemeinen 1:0,75 bis 1:20, vorzugsweise 1:1 bis 1:6.

Die Polymerisationstemperatur richtet sich nach der Zerfallstemperatur des eingesetzten Initiators. Sie liegt im allgemeinen zwischen 50 bis 150°C, vorzugsweise zwischen 55 und 100°C. Die Polymerisation dauert 0,5 bis einige Stunden. Es hat sich bewährt, ein Temperaturprogramm anzuwenden, bei dem die Polymerisation bei niedriger Temperatur, z.B. 70°C begonnen wird und mit fortschreitendem Polymerisationsumsatz die Reaktionstemperatur erhöht wird.

Nach der Polymerisation kann das Polymerisat mit übichen Methoden, z.B. durch Filtrieren oder Dekantieren, isoliert und gegebenenfalls nach ein oder mehreren Wäschen getrocknet werden.

Der Stand der Technik hat die Erfindung nicht nahegelegt: In der EP-PS 98 130 werden Vernetzermengen von 0,1 bis 3 Gew.-% empfohlen, aber in den Beispielen wird als Polymerisationsinitiator Dibenzoylperoxid verwendet. In der EP-PS 101 943 werden Vernetzermengen von 0,05 bis 12,5 Gew.-% empfohlen, aber in den Beispielen wird tert.-Butylperoxybenzoat verwendet.

Zur Herstellung von Ionenaustauschem mit verbesserter Druckstabilität wird in der DE-PS 2 827 475 die Verwendung von Peroxyestern oder Peroxycarbonaten als Initiator beansprucht. Eine Empfehlung, mit aliphatischen Peroxyestern hergestellte Polymerisate als Saat für seed/feed-Polymerisate zu verwenden, enthält diese Druckschrift allerdings nicht. Die Herstellung von schwach vernetzten Polymerisaten mit einem sehr geringen Gehalt an extrahierten Bestandteilen schien bislang nicht möglich.

Weiterer Gegenstand der Erfindung sind daher vernetzte Polymerisate mit einem Quellungsindex von 5 bis 10 (gemessen in Toluol; mit Styrol werden gleiche Quellungsindices erhalten) und einem Gehalt an löslichem Anteil (gemessen durch Extraktion mit Tetrahydrofuran) von weniger als 5 Gew.-%.

### Beispiele

### Lösliche Anteile

Zur Bestimmung der löslichen Anteile wurden 5 bis 7 g Perlpolymerisat in eine Extraktionshülse eingewogen und über Nacht in einer Soxhlet-Apperatur mit 800 ml Toluol extrahiert (Badtemperatur: 140°C). Das Extrakt wurde über eine Nutsche mit Schwarzbandfilter filtriert und am Rotationsverdampfer auf ca. 1 ml eingeengt. Anschließend wurden 300 ml Methanol zugesetzt und im Vakuum am Rotationsverdampfer bis zur Gewichtskonstanz getrocknet. Von jeder Probe wurde eine Doppelbestimmung durchgeführt.

### Quellung

Die Quellung der Perlpolymerisate wurde in Toluol (und zum Teil darüber hinaus in THF und Styrol bei Raumtemperatur) untersucht. Dazu wurden 10 ml getrocknetes, gesiebtes Perlpolymerisat in einem 100 ml-Standzylinder eingewogen. Der Quotient aus dem Volumen der Schüttung (V₀) und der eingewogener Menge (m) ergab das Schüttvolumen (V_{sch}). Der Standzylinder wurde mit dem Quellmittel auf 100 ml aufgefüllt und 10 bis 20 h stehen gelassen. Dabei wurde öfter geschüttelt und darauf geachtet, daß eventuell auftretende Luftblasen entweichen können. Das Volumen der gequollenen Schüttung wurde abgelesen und ergab V₁. Der Quotient aus V₁ und V₀ ist definitionsgemäß der Volumen-Quellungsindex (QI/_{v/v}).

### Beispiel 1 (Vergleichsbeispiel)

In einem 3l-Glasreaktor werden 1500 ml entionisiertes Wasser vorgelegt und hierin 10 g Dinatriumhydrogenphosphatdecahydrat, 0,03 g Natriumnitrit und 3 g Methylcellulose (Tylose MH 50) bei Raumtemperatur gelöst. Unter Rühren mit 350 rpm wird eine Mischung aus x g Styrol, y g kommerziellem Divinylbenzol (80% Divinylbenzol, 20% Ethylstyrol) und 5 g Dibenzoylperoxid (100%ig) zugesetzt. In das Reaktionsgefäß wird ein Stickstoffstrom von 20 l/h eingeleitet. Der Ansatz wird zunächst 10 Stunden bei 75°C, anschließend 1 Stunde bei 95°C gehalten und dann auf Raumtemperatur abgekühlt. Der Feststoff wird mit Hilfe eines Siebes (50 µm Maschenweite) isoliert, mehrfach mit Wasser gewaschen und bei 75°C im Trockenschrank getrocknet. Man erhält 950 g Perlpolymerisat mit einer mittleren Teilchengröße von ca. 250 µm.

Der Quellungsindex wird in Toluol bei 25°C bestimmt. Die löslichen Anteile werden durch sechsstündiges Extrahieren mit Tetrahydrofuran in einem Soxhlet-Extraktor ermittelt.

| | Menge Styrol (x) | Menge DVB (y) | QI | lösliche Anteile |
|---|---|---|---|---|
| 1A | 997 g | 3 g | 9,5 | 16,8% |
| 1B | 996 g | 4 g | 7,8 | 14,5% |
| 1C | 995 g | 5 g | 6,9 | 10,5% |

### Beispiel 2 (erfindungsgemäß)

Beispiel 1 wird wiederholt, wobei anstelle von Dibenzoylperoxid tert.-Butylperoxy-2-ethylhexanoat eingesetzt wird. Man enthält 955 g Perlpolymerisat mit einer mittleren Teilchengröße von ca. 250 µm.

| | Menge Styrol (x) | Menge DVB (y) | QI | lösliche Anteile |
|---|---|---|---|---|
| 2A | 998 g | 2 g | 8,6 | 4,5% |
| 2B | 997 g | 3 g | 7,7 | 3,7% |
| 2C | 996 g | 4 g | 7,1 | 2,5% |

### Beispiel 3 (erfindungsgemäß)

Beispiel 1 wird wiederholt, wobei anstelle von Dibenzoylperoxid 2,5-Bis(2-ethylhexanoylperoxy)-2,5-dimethylhexan eingesetzt wird. Man enthält 950 g Perlpolymerisat mit einer mittleren Teilchengröße von ca. 250 µm.

| | Menge Styrol (x) | Menge DVB (y) | QI | lösliche Anteile |
|---|---|---|---|---|
| 3 | 997,5 g | 2,5 g | 7,8 | 4,4 % |

## Patentansprüche

1. Verfahren zur Herstellung von vernetzten kugelförmigen Polymerisaten nach der Methode der Suspensionspolymerisation aus
a) 98,2 bis 99,7 Gew.-% Monomer,
b) 0,1 bis 0,8 Gew.-% Vernetzer und
c) 0,2 bis 1,0 Gew.-% Polymerisationsinitiator,
dadurch gekennzeichnet, daß als Polymerisationsinitiator mindestens ein aliphatischer Peroxyester verwendet wird.

2. Verfahren nach Anspruch 1, wonach die Polymerisate aus
a) 98,6 bis 99,6 Gew.-% Monomer,
b) 0,2 bis 0,4 Gew.-% Vernetzer und
c) 0,2 bis 1,0 Gew.-% Polymerisationsinitiator
hergestellt werden.

3. Verfahren nach Anspruch 1, wonach der aliphatische Peroxyester den Formeln I, II oder III 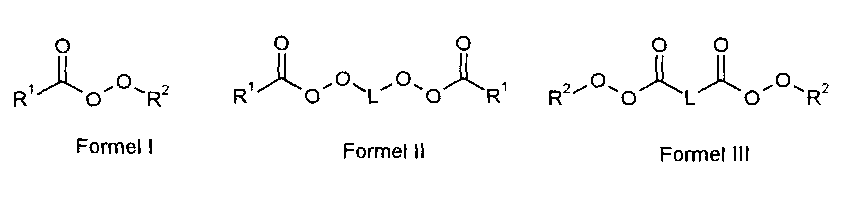 entspricht, worin
R¹ einen Alkylrest mit 2 bis 20 C-Atomen oder einen Cycloalkylrest mit bis zu 20 C-Atomen,
R² einen verzweigten Alkylrest mit 4 bis 12 C-Atomen und
L einen Alkylrest mit 2 bis 20 C-Atomen oder einen Cycloalkylenrest mit bis zu 20 C-Atomen bedeuten.

4. Verfahren nach Anspruch 1, wonach das Gemisch der Komponenten a) bis c) mikroverkapselt ist.

5. Vernetzte Polymerisate mit einem Quellungsindex von 5 bis 10 (gemessen in Toluol) und einem Gehalt an löslichen Anteilen (gemessen durch Extraktion mit Tetrahydrofuran) von weniger als 5 Gew.-%.
